# EUROPEAN PATENT APPLICATION

(11) **EP 4 776 430 A1**
(43) Date of publication of application: **15.07.2026**
(21) Application number: 25150806.5
(22) Date of filing: 09.01.2025
(51) Int. Cl.: H01R 11/01, H01R 13/6463

(54) **ETHERNET CONNECTOR FOR A MOTOR VEHICLE AND MANUFACTURING METHOD THEREOF**

(71) Applicant: ZF CV Systems Global GmbH, 3006 Bern (CH)
(72) Inventor: KOTULSKI, Ariel, 53-026 Wroclaw (PL)
(74) Representative: Ohlendorf, Henrike

(57) **Abstract**

An ethernet connector (4) for a motor vehicle (2), the connector (4) comprising at least two signal leads (5 - 8) arranged next to each other; wherein the signal leads (5 - 8) each have a rectangular cross section with a width (w) and a height (h), the height (h) being smaller than the width (w); wherein, in a first portion (L1) of the connector (4), the at least two signal leads (5 - 8) are arranged such that a height direction (h1) of a first one of the at least two signals leads (5 - 8) and a height direction (h1) of a second one of the at least two signal leads (5 - 8) run in parallel to a longitudinal axis (L) of the respective signals leads (5 - 8); and wherein, in a second portion (L2) of the connector (4), at least the first one of the at least two signal leads (5 - 8) is twisted by 90° with respect to the first portion (L1) around the longitudinal axis (L) of the first one of the at least two signal leads (5 - 8) such that a width direction (w1) of the first one of the at least two signals leads (5 - 8) runs in parallel to the longitudinal axis (L) of the first one of the at least two signal leads (5 - 8).

## Description

The disclosure is directed to an ethernet connector for a motor vehicle, an electrical system for a motor vehicle comprising the ethernet connector, a motor vehicle comprising the electrical system, and a method for manufacturing the ethernet connector.

An on-board electrical system can refer to electrical components in vehicles such as cars and commercial vehicle, e.g. trucks.

The electrical components of an on-board electrical system can include wiring and on-board voltage sockets, control units, sensors, display elements (e.g. warning and indicator lights, displays etc.), actuators (e.g. electric motors, lights and lighting systems etc.), bus systems, energy storage devices (e.g. batteries or accumulators etc.), generators, driver assistance systems, and/or comfort settings (e.g. electric seat adjustment etc.)

The on-board electrical system can be responsible for the power supply (energy on-board electrical system) and/or the flow of information between those components (communication on-board electrical system).

The electrical system may make use of Ethernet. Ethernet is a family of wired computer networking technologies. It was commercially introduced in 1980 and first standardized in 1983 as IEEE 802.3. Ethernet has since been refined to support higher bit rates, a greater number of nodes, and longer link distances, but retains much backward compatibility.

Systems communicating over Ethernet divide a stream of data into shorter pieces called frames. Each frame contains source and destination addresses, and error-checking data so that damaged frames can be detected and discarded; most often, higher-layer protocols trigger retransmission of lost frames. Per the OSI model, Ethernet provides services up to and including the data link layer.

The on-board electrical system may comprise an ethernet connector. An ethernet connector is for example described in EP 3171461 A1.

The connector may comprise two or more signal leads. A signal lead may be defined as a pathway through which (ethernet) data signals travel or transmitted using copper or other conductors. The signal leads have to be spaced apart from each other by a certain minimum distance in order to work correctly, i.e. such that the ethernet signals are transmitted effectively, ensuring they remain free from interference and do not disrupt one another. This minimum distance can be hard to achieve with certain envelopes, i.e. mechanical boundaries that function as a clearly defined perimeter or limit and cannot be crossed due to manufacturability or safety.

Against the background of this state of the art, one object of the present disclosure can be to specify a device and/or a method, each of which is suitable for enriching the state of the art.

The object is solved by the features of the independent claims. The dependent claims each relate to optional further developments of the disclosure.

An ethernet connector for a motor vehicle is provided. The connector comprises at least two signal leads arranged next to each other. The signal leads each have a rectangular cross section with a width and a height, the height being smaller than the width. In a first portion of the connector, the at least two signal leads are arranged such that a height direction of a first one of the at least two signals leads and a height direction of a second one of the at least two signal leads run in parallel to a longitudinal axis of the respective signals leads. In a second portion of the connector, at least the first one of the at least two signal leads is twisted by 90° with respect to the first portion around the longitudinal axis of the first one of the at least two signal leads such that a width direction of the first one of the at least two signals leads runs in parallel to the longitudinal axis of the first one of the at least two signal leads.

In other words, the Ethernet lead shape may can be changed by twisting said ethernet lead about an 90° angle around or with respect to its longitudinal axis. This allows to accommodate to a lack of space, i.e. to arrange the signal leads closer to each other while keeping the same distance between the leads and while keeping the same cross section of the leads.

The Ethernet standard that may be used by the connector is for example IEEE 802.3bw 100BASE-T1 (100 Mbps) and IEEE802.3bp 1000BASE-T1 (1 Gbps) (version as of the date of filing of this application).

The longitudinal direction can be the direction being perpendicular to the cross section. The height of the cross section can be measured along the height direction thereof. The width of the cross section may be measured along the width thereof. The height direction and the width direction may enclose an angle of 90°.

The motor vehicle can be a passenger car, optionally an automobile, or a commercial vehicle, such as a bus, tractor and/or truck. The truck may comprise a tractor unit and/or one or more trailers.

Furthermore, the definitions and explanations provided above apply mutatis mutandis to the proposed ethernet connector.

In the following optional further developments of the above described ethernet connector are explained in detail.

In the second portion of the connector, only the first one of the at least two signal leads can be twisted by 90° with respect to the first portion around the longitudinal axis of the first one of the at least two signal leads such that the height direction of the first one of the at least two signals leads is perpendicular to the height direction of the second one of the at least two signal leads.

In the second portion of the connector, the first one of the at least two signal leads can be twisted by 90° with respect to the first portion around the longitudinal axis of the first one of the at least two signal leads. In the second portion of the connector, the second one of the at least two signal leads is twisted by 90° with respect to the first portion along a longitudinal axis of the second one of the at least two signal leads. Therefore, the width direction of the first one of the at least two signals leads can run in parallel to a width direction of the second one of the at least two signal leads.

In other words, one or more, e.g. two, of the signal leads may be twisted by 90°, respectively, in order to achieve the above described effect of at least keeping a required minimum distance between the leads while reducing an overall space needed for the leads inside the connector.

In a third portion of the connector, at least the first one of the at least two signal leads can be twisted by 90° with respect to the second portion around the longitudinal axis of the first one of the at least two signal leads such that the height direction of the first one of the at least two signals leads runs in parallel to the longitudinal axis of the first one of the at least two signal leads.

In other words, optionally when there is more space available in the connector, the one or more of the twisted leads may be twisted back and may be arranged in the same way as in the first portion.

Along the longitudinal axis of the first one of the at least two signal leads, the first portion of the connector can be followed by the second portion of the connector with can in turn be followed by the third portion of the connector. Along the longitudinal axis of the second one of the at least two signal leads, the first portion of the connector can be followed by the second portion of the connector with can in turn followed by the third portion of the connector.

In the second portion of the connector, the at least two signal leads can be spaced apart from each other by a distance of at least 0.9 mm, optionally at least 1.3 mm.

Those distances can be suitable to ensure that the signal leads work correctly.

The connector can comprise an overmold that fixes a position of the at least two signal leads with respect to each other.

That is, the overmold may hold the signal leads in place. The overmold may be manufactured using overmolding which is a specialized injection molding process where one material is molded over another. The overmold may molded in a first stage and may be put in a second and separate stage of the manufacturing process into a bigger form to be molded again

An electrical system or a wiring system for a motor vehicle can be provided, the system comprising the ethernet connector described above.

A motor vehicle can be provided, the motor vehicle comprising the system described above.

A method for manufacturing an ethernet connector for a motor vehicle is provided. The method comprises arranging at least two signal leads next to each other. The signal leads each have a rectangular cross section with a width and a height, the height being smaller than the width. In a first portion of the connector, the at least two signal leads are arranged such that a height direction of a first one of the at least two signals leads and a height direction of a second one of the at least two signal leads run in parallel to a longitudinal axis of the respective signals leads. In a second portion of the connector, at least the first one of the at least two signal leads is twisted by 90° with respect to the first portion around the longitudinal axis of the first one of the at least two signal leads such that a width direction of the first one of the at least two signals leads runs in parallel to the longitudinal axis of the first one of the at least two signal leads.

The description given above with respect to the ethernet connector applies mutatis mutandis to the method and vice versa.

An optional embodiment is described below with reference to Figures 1 to 3.
Fig. 1 schematically shows a connector frame comprising an ethernet connector that forms part of an electrical system of a motor vehicle in a top view,
Fig. 2 schematically shows the ethernet connector of figur1 in a top view, and
Fig. 3 shows two signal leads of the ethernet connector shown in figure 1 and 2.

Same reference signs relate to the same parts throughout the description of the figures.

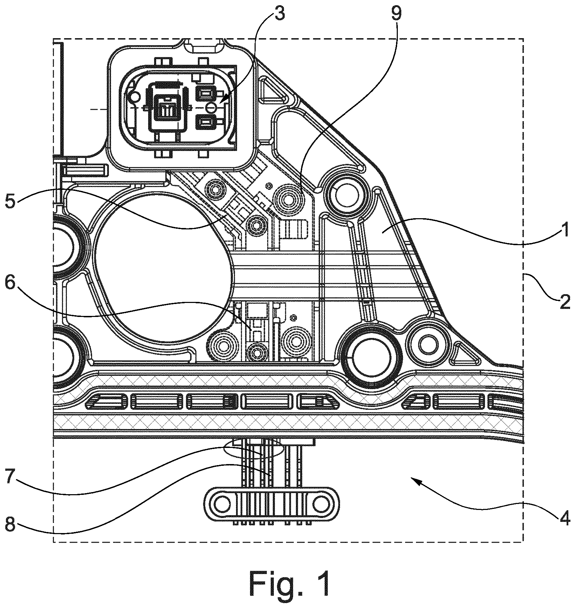

In Figure 1 a connector frame 1 is shown. The frame 1 forms part of a motor vehicle 2 (not shown in more detail). The frame 1 comprises an ethernet connector 4 with an interface 3 which in turn forms part of a wiring system (not shown in more detail) of the motor vehicle 2. The interface 3 may be a female or male part. Here, the interface 3 is a female part configured to receive a male part (not shown) of another ethernet connector. The shown ethernet connector 4 may form part of gearbox control unit that may be connected via the interface 3 to the gear box (not shown) of the vehicle 2.

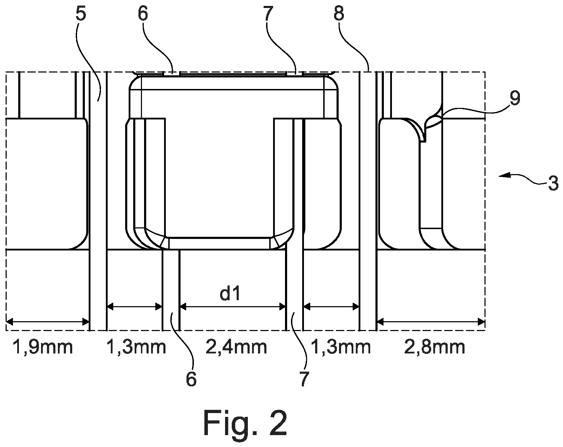

As can also be gathered from figure 2, showing the circled portion of figure 1 in more detail, the ethernet connector 4 comprises four signal leads 5-8, the four signal leads 5 - 8 being arranged next to each other. The ethernet connector 4 comprises an overmold 9 that tat holds the four signal leads 5 - 8 and fixes a position of the four signal leads 5 - 8 with respect to each other.

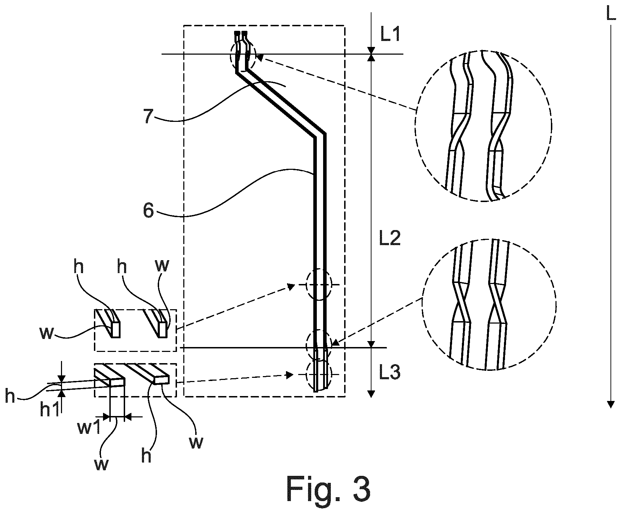

As can be gathered from figure 3, showing the two inner ones 6, 7 of the four signals leads 5 - 8 in detail, at least said two signal leads 6, 7 each have a rectangular cross section with a width w and a height h, the height h being smaller than the width w.

The connector 4 and also the two signal leads may be divided into three portion L1 - L3. Along a longitudinal axis L of the two signal leads 6, 7, a first portion L1 of the connector 4 is followed by a second portion L2 of the connector 4 with is in turn followed by a third portion L3 of the connector 4.

In the first portion L1 of the connector 4, the at least two signal leads 6, 7 are arranged such that a respective height directions h1 of the two signals leads 6, 7 runs in parallel to each other and in parallel to the respective longitudinal axis L of the two signal leads 6, 7.

At the beginning of the second portion L2, both signal leads 6, 7 are twisted by 90° with respect to the first portion L1 around their respective longitudinal axis L such that the width directions w1 of the two signals leads 6, 7 run in the second portion L2 in parallel to a to each other and in parallel to the respective longitudinal axis L of the two signal leads 6, 7. In the second portion L2, the at least two signal leads are spaced apart from each other by a distance d1 of at least 0.9 mm, optionally at least 1.3 mm, here 2.4 mm (see figure 2). It should be noted, that it is also possible that only of the two signal leads 6, 7 is twisted in the second portion L2.

At the beginning of the second portion L2, both signal leads 6, 7 are twisted by 90° with respect to the second portion L2 around their respective longitudinal axis L such that the respective height directions h1 of the two signals leads 6, 7 runs in parallel to each other and in parallel to the respective longitudinal axis L of the two signal leads 6, 7.

### Reference signs (Part of the description)

- 1: connector frame
- 2: motor vehicle
- 3: ethernet connector interface
- 4: ethernet connector
- 5-8: signal lead
- 9: overmold

- d1: distance

- h: height
- h1: height direction

- L: longitudinal axis
- L1: first portion
- L2: second portion
- L3: third portion

- w: width
- w1: width direction

## Claims

1. An ethernet connector (4) for a motor vehicle (2), **characterized in that**:
- the connector (4) comprises at least two signal leads (5 - 8) arranged next to each other,
- the signal leads (5 - 8) each have a rectangular cross section with a width (w) and a height (h), the height (h) being smaller than the width (w),
- in a first portion (L1) of the connector (4), the at least two signal leads (5 - 8) are arranged such that a height direction (h1) of a first one of the at least two signals leads (5 - 8) and a height direction (h1) of a second one of the at least two signal leads (5 - 8) run in parallel to a longitudinal axis (L) of the respective signals leads (5 - 8), and
- in a second portion (L2) of the connector (4), at least the first one of the at least two signal leads (5 - 8) is twisted by 90° with respect to the first portion (L1) around the longitudinal axis (L) of the first one of the at least two signal leads (5 - 8) such that a width direction (w1) of the first one of the at least two signals leads (5 - 8) runs in parallel to the longitudinal axis (L) of the first one of the at least two signal leads (5 - 8).

2. The ethernet connector (4) according to claim 1, **characterized in that**, in the second portion (L2) of the connector (4), only the first one of the at least two signal leads (5 - 8) is twisted by 90° with respect to the first portion (L1) around the longitudinal axis (L) of the first one of the at least two signal leads (5 - 8) such that the height direction (h1) of the first one of the at least two signals leads (5 - 8) is perpendicular to the height direction (h1) of the second one of the at least two signal leads (5 - 8).

3. The ethernet connector (4) according to claim 1, **characterized in that**:
- in the second portion (L2) of the connector (4), the first one of the at least two signal leads (5 - 8) is twisted by 90° with respect to the first portion (L1) around the longitudinal axis (L) of the first one of the at least two signal leads (5 - 8), and
- in the second portion (L2) of the connector (4), the second one of the at least two signal leads (5 - 8) is twisted by 90° with respect to the first portion (L1) along a longitudinal axis (L) of the second one of the at least two signal leads (5 -8)
such that the width direction (w1) of the first one of the at least two signals leads (5 - 8) runs in parallel to a width direction (w1) of the second one of the at least two signal leads (5 - 8).

4. The ethernet connector (4) according to any of claims 1 to 3, **characterized in that**:
- in a third portion (L3) of the connector (4), at least the first one of the at least two signal leads (5 - 8) is twisted by 90° with respect to the second portion (L2) around the longitudinal axis (L) of the first one of the at least two signal leads (5 - 8) such that the height direction (h1) of the first one of the at least two signals leads (5 - 8) runs in parallel to the longitudinal axis (L) of the first one of the at least two signal leads (5 - 8).

5. The ethernet connector (4) according to claim 4, **characterized in that**:
- along the longitudinal axis (L) of the first one of the at least two signal leads (5 - 8), the first portion (L1) of the connector (4) is followed by the second portion (L2) of the connector (4) with is in turn followed by the third portion (L3) of the connector (4), and
- along the longitudinal axis (L) of the second one of the at least two signal leads (5 - 8), the first portion (L1) of the connector (4) is followed by the second portion (L2) of the connector (4) with is in turn followed by the third portion (L3) of the connector (4).

6. The ethernet connector (4) according to any of claims 1 to 5, **characterized in that**:
- in the second portion (L2) of the connector (4), the at least two signal leads (5 - 8) are spaced apart from each other by a distance (d1) of at least 0.9 mm, optionally at least 1.3 mm.

7. The ethernet connector (4) according to any of claims 1 to 6, **characterized in that**:
- the connector (4) comprises an overmold (9) that fixes a position of the at least two signal leads (5 - 8) with respect to each other.

8. A wiring system for a motor vehicle (2), the system comprising the ethernet connector (4) according to any of claims 1 to 7.

9. A motor vehicle (2), the motor vehicle (2) comprising the wiring system according to claim 8.

10. Method for manufacturing an ethernet connector (4) for a motor vehicle (2), **characterized in that** the method comprises:
- arranging at least two signal leads (5 - 8) next to each other,
- wherein the signal leads (5 - 8) each have a rectangular cross section with a width (w) and a height (h), the height (h) being smaller than the width (w),
- wherein in a first portion (L1) of the connector (4), the at least two signal leads (5 - 8) are arranged such that a height direction (h1) of a first one of the at least two signals leads (5 - 8) and a height direction (h1) of a second one of the at least two signal leads (5 - 8) run in parallel to a longitudinal axis (L) of the respective signals leads (5 - 8), and
- wherein in a second portion (L2) of the connector (4), at least the first one of the at least two signal leads (5 - 8) is twisted by 90° with respect to the first portion (L1) around the longitudinal axis (L) of the first one of the at least two signal leads (5 - 8) such that a width direction (w1) of the first one of the at least two signals leads (5 - 8) runs in parallel to the longitudinal axis (L) of the first one of the at least two signal leads (5 - 8).
